# EUROPEAN PATENT SPECIFICATION

(11) **EP 3 927 951 B1**
(45) Date of publication and mention of the grant of the patent: **29.03.2023**
(21) Application number: 20711315.0
(22) Date of filing: 14.02.2020
(51) Int. Cl.: F02B 43/10, F02M 25/03, F02B 75/00, F02M 25/025, F02G 5/02, F02G 1/02, F02G 3/02, F02B 47/02

(54) **INTERNAL COMBUSTION ENGINE WITH ELECTROLYSIS MEANS**
VERBRENNUNGSMOTOR MIT ELEKTROLYSEVORRICHTUNG
MOTEUR À COMBUSTION INTERNE AVEC MOYENS D'ÉLECTROLYSE

(30) Priority: 18.02.2019 LV 190007
(43) Date of publication of application: 29.12.2021
(73) Proprietor: Teteris, Visvaldis, 3466 "Vidmindes", Sakas pag., Pavilostas nov. (LV)
(72) Inventor: Teteris, Visvaldis, 3466 "Vidmindes", Sakas pag., Pavilostas nov. (LV)
(74) Representative: Kromanis, Artis
(86) International application number: PCT/IB2020/051240
(87) International publication number: WO 2020/170093

(56) References cited:
- WO-A1-2007/091105
- WO-A1-2010/136879
- DE-A1-102009 026 374
- FR-A1- 3 073 899
- GB-A- 2 353 562
- KR-A- 20030 044 602
- US-A1- 2011 210 008
- US-A1- 2018 298 813

## Description

### Field of the Invention

The invention relates to internal combustion engines, that use gas obtained by means of electrolysis of water, and to a method for control of such engines.

### Background of the Invention

The publication of German Patent application No. DE 10 2009 026 374 A describes an internal combustion engine that operates on a fossil fuel and hydrogen-oxygen mixture, that is fed to an inlet channel of the combustion chamber. The hydrogen-oxygen mixture is produced in the vehicle by means of electrolysis. The hydrogen-oxygen mixture is fed only in case, when the engine is working at high engine load. Similar solution is described in the publication of the International Patent application No. WO2007/091105.

The publication of Korean Patent application No. KR20030044602A describes an internal combustion engine where the hydrogen-oxygen mixture is generated by means of electrolysis and is further transported through the reservoir and the piping system to the work cylinder of the engine.

The publication of the US Patent application No. US 2018/0298813 describes a method and system for operation of the internal combustion engine using a hydrogen-oxygen mixture. However, in this case, the hydrogen-oxygen mixture produced during electrolysis of water is also transported through the reservoir and the piping system to the work cylinder of the internal combustion engine. Moreover, the engine is designed for operation along with the fossil fuel.

Document WO2010/136879 A1 discloses an internal combustion engine comprising a work cylinder, a piston arranged within the work cylinder, an inlet valve and an outlet valve and an electrolyser comprising electrodes for breaking down water into a gas mixture of hydrogen and oxygen.

The aim of the invention is to obtain the internal combustion engine, that operates only on a mixture of hydrogen and oxygen, and is sufficiently compact in order to be arranged in the engine space of the vehicle without its substantial modifications. Moreover, the aim of the invention is to utilize the unique properties of water in different physical states. Water being broken down into components forms a mixture of hydrogen and oxygen molecules that is widely known as Brown's gas. The released heat of combustion of said gas is used to obtain the movement of the piston. Moreover, the accumulated thermal energy of the water in its gaseous state, i.e. water vapor, might be used as well for obtaining the movement of said piston.

The aim of current invention is the embodiment of the internal combustion engine, that comprises a work cylinder with a piston arranged therein, that is connected with a crankshaft and piston rod mechanism for a conversion of a translation motion of the piston to a rotary motion, and an inlet valve and an outlet valve. Said construction and its kinematics are common for the internal combustion engines. However, further, in order to achieve the aim of the invention, the combustion engine is provided with an outer cylinder, that encloses the work cylinder in such a way, that an intermediate chamber is formed between the enclosed work cylinder and the outer cylinder. Said construction is formed as a cylinder in a cylinder with a space between the outer surface of the enclosed cylinder and the inner surface of the enclosing cylinder, that forms the space of the intermediate chamber.

Furthermore at least two electrolytic electrodes are arranged in said intermediate chamber for breaking down water to form a mixture of hydrogen and oxygen by means of electrolysis. The number of the electrolytic electrodes depends on a designed capacity of each internal combustion engine. The electrolytic electrodes in the intermediate chamber preferably are arranged along the perimeter of the chamber in such a way, that the mixture of hydrogen and oxygen or the Brown's gas mixture is uniformly generated within the chamber. The electrolytic electrodes are separated from the both cylinders by means of a thermally resistant electric insulator. In order to promote electrolysis, the intermediate chamber is filled up with water. Preferably the chamber is filled up with water to such an extent, that the electrolytic electrodes are immersed in it. The engine is equipped with a water inlet channel, that is in a fluid communication with the intermediate chamber, in order to provide a water supply to said intermediate chamber. The fluid connection is a connection, that provides a fluid flow or communication, so as the fluid can flow from one site to another. The water inlet channel comprises a water inlet valve, that is configurated so as to supply the required amount of water to the intermediate chamber. The control of the water amount or water level within the intermediate chamber is implemented by means of a water level sensor. Further the space above the water level within the intermediate chamber is a combustion and steam area where the hydrogen-oxygen mixture is ignited.

The intermediate chamber of the internal combustion engine is in a fluid communication with the work cylinder via the inlet channel and the outlet channel. Whereas the inlet channel and the outlet channel have the inlet valve and the outlet valve, accordingly, at the junction point with the work cylinder. A reduction valve, that is arranged in the inlet channel, is configured to control the vapor within the intermediate chamber.

The outer cylinder of the internal combustion engine is enclosed with a thermal insulation layer. The thermal insulation layer encloses the outer cylinder in such a way, that it provides the thermal insulation of the intermediate chamber from the external environment. The heat generated by the combustion of Brown's gases is sustained within the internal combustion engine, thus reducing its losses to the environment. As a result, the internal combustion engine more effectively utilizes its own heat for the maintenance of the work process.

The internal combustion engine further comprises a spark plug that is disposed in the intermediate chamber and is configured to ignite electrolytically generated hydrogen-oxygen gas, i.e. the mixture of hydrogen and oxygen. The spark plugs known to the person that is skilled in the art can be used as said spark plug.

In addition, a water spray valve is arranged within the work cylinder of the internal combustion engine. The water spray valve is configured to spray water into the work cylinder at predetermined conditions. For example, in such a case, when the working temperature of the work cylinder reaches a predetermined temperature threshold and it is necessary to cool the latter till the temperature reaches the working or desired temperature range. The water spray valve is arranged in the work cylinder between the inlet valve and the outlet valve.

The internal combustion engine additionally contains several temperature sensors for temperature monitoring and control. The engine contains a temperature sensor of the intermediate chamber that is arranged therein and configured to read in the temperature within the latter. Temperature sensors, that are well known in the prior art, such as thermocouples, might be used as temperature sensors in the current embodiment of the invention.

The control of the internal combustion engine is provided via control unit that contains the control algorithm of the engine for its execution. The control unit is connected to the members of the internal combustion engine for the control of the latter. The control unit at least is connected to the spark plug, electrolytic electrodes, the reduction valve, the water spray valve, the temperature sensor of the intermediate chamber, the water level sensor and the water supply valve. The power supply of the control unit as well as the power supply of the other members of the internal combustion engine is provided via electric power source or power supply unit. Any DC power source, for example, a rechargeable battery, can serve as a power source.

In one of the embodiments of the invention an auxiliary part of the work cylinder, that comprises an auxiliary inlet valve and an auxiliary outlet valve, is designed within the section of the work cylinder of the internal combustion engine that is behind the piston. The intermediate chamber is divided into two separate auxiliary chambers by means of an intermediate wall, where each of them comprises separate electrolytic electrodes and separate combustion and steam areas, wherein the auxiliary intermediate chamber is in fluid communication with the auxiliary work cylinder section via auxiliary inlet channel and auxiliary outlet channel. Said internal combustion engine further comprises: an auxiliary spark plug arranged within the auxiliary intermediate chamber; an auxiliary water sprayer valve arranged within the auxiliary work cylinder; an auxiliary reduction valve arranged within the auxiliary inlet channel; an auxiliary temperature sensor and an auxiliary water level sensor arranged within the auxiliary intermediate chamber; and an auxiliary water feeding channel, that is in fluid communication with the auxiliary intermediate chamber for feeding of the water to said auxiliary intermediate chamber.

As it was mentioned above, the control of the internal combustion engine is provided via control unit that contains the control algorithm of the engine for its execution. The control algorithm of the engine includes the production of Brown's gas, using the electrolytic electrodes within the intermediate chamber, that is followed by its ignition. Hence the pressure of the gas increases. The gas ignited in such a manner is subsequently injected within the work cylinder. As a result, the piston in the cylinder is being driven, thus operating the engine.

The method of controlling the internal combustion engine optionally may include additional engine control steps, for example, such as water spraying within the work cylinder in order to control the operating temperature of the engine within a predetermined temperature range.

The current embodiment of the combustion engine does not require air or oxygen inflow. It might be used in confined spaces, for example, in submarines. The only outflow product is water, which due to its not toxic nature can be reused.

Prior to describing possible embodiments of the present invention, it should be noted, that the current invention is not limited to a particular technical implementation or application that was previously mentioned. It can be implemented in different ways without broadening the scope of the invention. The terminology provided is intended for description and understanding of the invention, but not for limitation of its scope.

### Brief description of the drawings

Fig. **1** illustrates an internal combustion engine in its cross section along a longitudinal axis **X** of a work cylinder **1**, when a piston **2** moves in a direction to a top dead center.
Fig. **2** illustrates an internal combustion engine in its cross section orthogonal to the longitudinal axis **X** of the work cylinder **1** as shown in Fig. **1**.
Fig. **3** illustrates one embodiment of the invention, where the work cylinders **1** and **1A** are on both sides of the piston **2**.
Fig. **4** illustrates an internal combustion engine in its cross section orthogonal to the longitudinal axis **X** of the work cylinder **1**.

### Detailed Description of the Invention

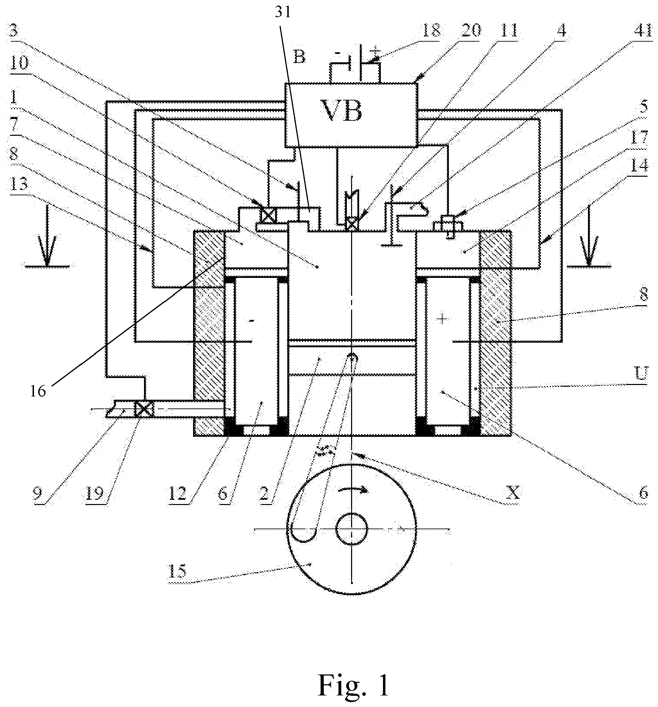

Fig. **1** illustrates the internal combustion engine, that comprises a crankshaft and piston rod mechanism **15**, a work cylinder **1** and a piston **2** arranged therein. The work cylinder **1** comprises an inlet valve **3** and an outlet valve **4**. The internal combustion engine further comprises an outer cylinder **16**, that encloses the work cylinder **1** in such a way, that an intermediate chamber **17** is formed between the enclosed work cylinder **1** and the outer cylinder **16**. Electrolytic electrodes **6** are arranged along the perimeter of said intermediate chamber **17**. The electrodes **6** abut on thermally resistant electric insulators **12**. The intermediate chamber **17** is designed so as to hold the water **U** filled in it. The space above the water level **U** is a combustion and steam area **7**. Moreover, the intermediate chamber **17** is in fluid communication with the work cylinder **1** via the inlet channel **31**, that is followed by the inlet valve **3**, and via the outlet channel **41**, that is followed by the outlet valve **4**. The engine further comprises a thermal insulation layer **8**, that encloses the outer cylinder **16** in such a way, that it provides the thermal insulation of the intermediate chamber **17** from the external environment. A spark plug **5**, that is configured to ignite a gas obtained by means of electrolysis, is arranged within the combustion and steam area **7** of the intermediate chamber **17**. Moreover, a water sprayer **11**, that is configured to spray water **U** into the work cylinder **1**, is arranged at the upper side of the work cylinder **1** above the piston **2**. Whereas a reduction valve **10**, that is configured to control a feed of heated gas within the intermediate chamber **17** via the inlet channel **31** to the outlet valve **3** and further to the work cylinder **1**, is arranged in the inlet channel **31**. The engine is further equipped with a water feeding channel **9**, that is in fluid communication with the intermediate chamber **17**, for supply of the water **U** to said intermediate chamber **17**. Water supply **U** is controlled by means of water feeding valve **19**.

Fig. **1** illustrates the internal combustion engine that comprises a control unit **20** with a power supply **18**. The temperature sensor **13**, that is arranged within the intermediate chamber **17** and is configured to read in the temperature within the latter **17**, is connected to the control unit **20**. The control unit **20** is further provided with a water level sensor **14**, that is arranged within the intermediate chamber **17** and is configured to read in the water level within the intermediate chamber **17**.

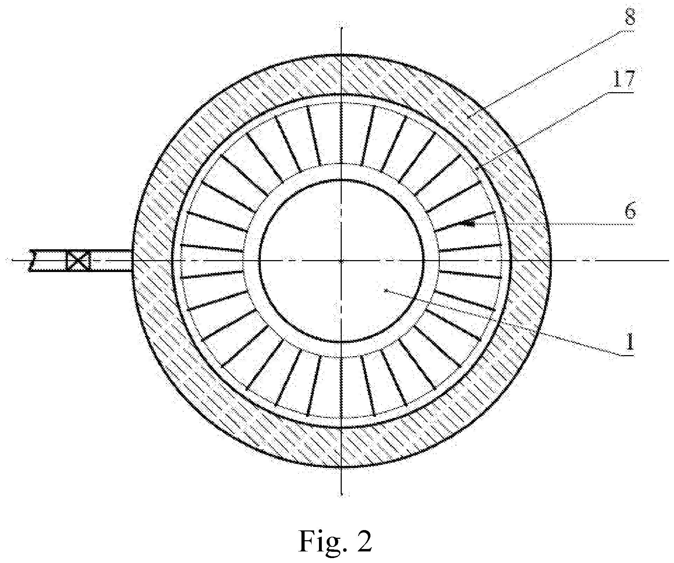

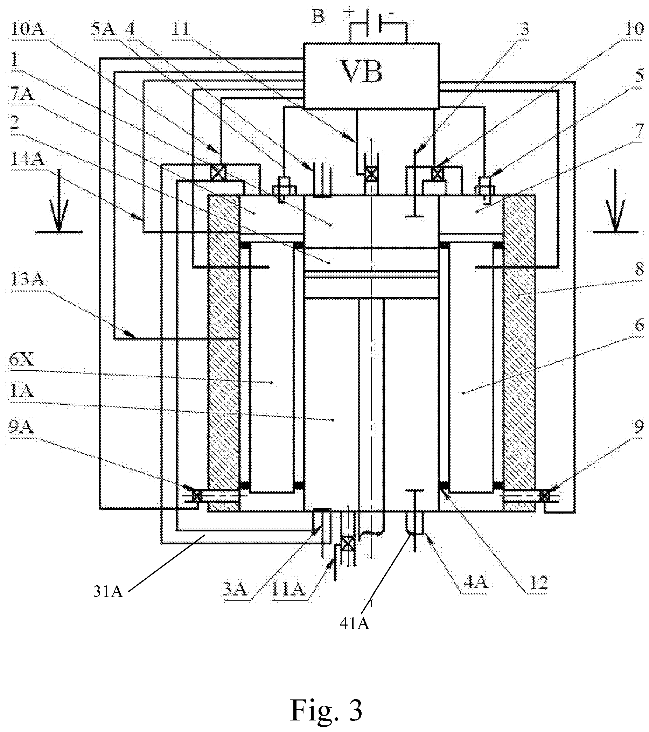

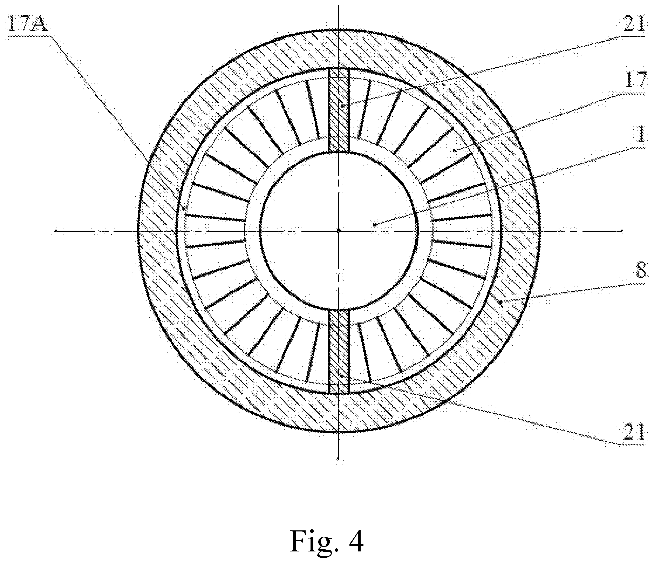

Fig. **2** illustrates the lateral section of the internal combustion engine transversely with respect to longitudinal axis **X** of the work cylinder **1**, it shows the work cylinder **1** and its enclosing intermediate chamber **17** with the thermal insulation layer **8** around it. Moreover, it shows the arrangement of the electrolysis electrodes **6** along the interior perimeter of the intermediate chamber **17**, thus providing the uniform electrolysis process within the intermediate chamber **17**. The object of the invention, while retaining its essence, can be implemented by a combination of two cylinders or two work spaces in one cylinder (Fig. **3** and **4**). The internal combustion engine comprises the work cylinder **1** and the auxiliary work cylinder **1A**, that is separated from the work cylinder **1** by means of the piston **2**. The work cylinder **1** comprises the inlet valve **3** and the outlet valve **4**. Whereas auxiliary work cylinder **1A** comprises an auxiliary inlet valve **3A** and an auxiliary outlet valve **4A**. Moreover, unlike previously described embodiments of the invention, in this implementation the intermediate chamber **17** comprises an intermediate wall **21,** by means of which the intermediate chamber **17** is divided into two separate intermediate chambers as the intermediate chamber **17** and auxiliary intermediate chamber **17A**, where each independently comprises electrolytic electrodes **6** and **6X** and a combustion and steam area **7** and **7A** accordingly. Auxiliary intermediate chamber **17A** is in a fluid communication with the auxiliary work cylinder **1A** via auxiliary inlet channel **31A** un auxiliary outlet channel **41A**. The internal combustion engine further comprises an auxiliary spark plug **5A**, that is arranged in the auxiliary intermediate chamber **17A**. Moreover, the engine is further equipped with the auxiliary water sprayer valve **11A** arranged in the auxiliary work cylinder **1A**, the auxiliary reduction valve **10A** arranged in the auxiliary inlet channel **31A**, the auxiliary temperature sensor **13A** and the auxiliary water level sensor **14A** arranged in the auxiliary intermediate chamber **17A**, and the auxiliary water feeding channel **9A**, that is in fluid communication with the auxiliary intermediate chamber **17A** for feeding of the water **U** to said auxiliary intermediate chamber **17A**.

### List of references

1 - a work cylinder;
1A - an auxiliary work cylinder;
2 - a piston;
3 - an inlet valve;
3A - an auxiliary inlet valve;
4 - an outlet valve;
4A - an auxiliary outlet valve;
5 - a spark plug;
5A - an auxiliary spark plug;
6 - an electrolytic electrode;
6X - an auxiliary electrolytic electrode;
7 - an combustion and steam area;
7A - an auxiliary combustion and steam area;
8 - a thermal insulation layer;
9 - a water feeding channel;
9A - an auxiliary water feeding channel;
10 - a reduction valve;
10A - an auxiliary reduction valve;
11 - a water sprayer;
11A - an auxiliary water sprayer;
12 - electric insulator (thermally resistant);
13 - a temperature sensor;
13A - an auxiliary temperature sensor;
14 - a water level sensor;
14A - an auxiliary water level sensor;
15 - crankshaft and piston rod mechanism;
16 - an outer cylinder;
17 - an intermediate chamber;
17A - an auxiliary intermediate chamber;
18 - power supply;
19 - a water feeding valve;
20 - a control unit;
21 - an intermediate wall;
31 - an inlet channel;
31A - an auxiliary inlet channel;
41 - an outlet channel;
41A - an auxiliary outlet channel;
U - water; and
X - a longitudinal axis of a piston.

## Claims

1. An internal combustion engine comprising a work cylinder (1), a piston (2) arranged within the work cylinder (1), an inlet valve (3) and an outlet valve (4),
**characterized in that** the internal combustion engine further comprises:
an outer cylinder (16) enclosing the work cylinder (1), so that an intermediate chamber (17) is formed between enclosed work cylinder (1) and the outer cylinder (16), wherein at least two electrolytic electrodes (6) are arranged in said intermediate chamber (17) for breaking down water to form a mixture of hydrogen and oxygen by means of electrolysis, and the intermediate chamber (17) is formed so as to hold a water (U) filed therein, wherein the intermediate chamber (17) is in fluid communication with the work cylinder (1) via an inlet channel (31), which is followed by the inlet valve (3), and via an outlet channel (41), which is followed by the outlet valve (4);
a thermal insulation layer (8) enclosing the outer cylinder (16), so that a thermal insulation is provided for the intermediate chamber (17) from an environment;
a spark plug (5) arranged within the intermediate chamber (17) and configured to ignite a said mixture of hydrogen and oxygen obtained by means of electrolysis;
a water sprayer (11) arranged within the work cylinder (1) and configured to spray a water into the work cylinder (1); and
a reduction valve (10) arranged within the inlet channel (31) and adapted to control a feed of heated gas from the combustion of the hydrogen and oxygen mixture ignited by the spark plug in the intermediate chamber (17) via the inlet channel (31) to the outlet valve (3) and further to the work cylinder (1).

2. The internal combustion engine according to Claim 1, **characterized in that** the engine further comprises a temperature sensor (13) arranged in the intermediate chamber (17) and configured to control a temperature within the intermediate chamber (17).

3. The internal combustion engine according to Claim 1 or 2, **characterized in that** the engine further comprises a water level sensor (14) arranged in the intermediate chamber (17) and configured to control a water level of the water within the intermediate chamber (17)

4. The internal combustion engine according to any of Claims 1 to 3, **characterized in that** the engine is equipped with a water feeding channel (9), which is in fluid communication with the intermediate chamber (17) for feeding of the water (U) to said intermediate chamber (17).

5. The internal combustion engine according to any of Claims 1 to 4, **characterized in that** the water sprayer (11) is arranged within the work cylinder (1) between the inlet valve (3) and the outlet valve (4).

6. The internal combustion engine according to any of Claims 1 to 5, **characterized in that** the piston (2) is connected to the crankshaft and piston rod mechanism (15) for the conversion of a translation motion of the piston (2) to a rotary motion.

7. The internal combustion engine according to any of Claims 1 to 5, **characterized in that** in a section of the work cylinder (1), that is behind the piston (2), an auxiliary work cylinder (1A) is designed, the auxiliary work cylinder (1A) comprises an auxiliary inlet valve (3A) and an auxiliary outlet valve (4), wherein the intermediate chamber (17) is divided in two separate auxiliary chambers (17, 17A) by means of an intermediate wall (21), wherein each auxiliary chamber (17, 17A) comprises its own electrolytic electrodes (6) and its own combustion and steam areas (7, 7A), wherein the auxiliary intermediate chamber (17A) is in a fluid communication with the auxiliary work cylinder (1A) via an auxiliary inlet channel (31A) and an auxiliary outlet channel (41);
wherein the internal combustion engine further comprises:
an auxiliary spark plug (5A) arranged within the auxiliary intermediate chamber (17A);
an auxiliary water sprayer (11A) arranged within the auxiliary work cylinder (1A);
an auxiliary reduction valve (10A) arranged within the auxiliary inlet channel (31A);
an auxiliary temperature sensor (13A) and an auxiliary water level sensor (14A) arranged in the auxiliary intermediate chamber (17A); and
an auxiliary water feeding channel (9A) which is in fluid communication with the auxiliary intermediate chamber (17A) for feeding of the water (U) to said auxiliary intermediate chamber (17A).

## Patentansprüche

1. Verbrennungsmotor mit einem Arbeitszylinder (1), einem innerhalb des Arbeitszylinders (1) angeordneten Kolben (2), einem Einlassventil (3) und einem Auslassventil (4),
**dadurch gekennzeichnet, dass** der Verbrennungsmotor ferner umfasst:
einen den Arbeitszylinder (1) umschließenden Außenzylinder (16), so dass zwischen dem umschlossenen Arbeitszylinder (1) und dem Außenzylinder (16) eine Zwischenkammer (17) gebildet ist, wobei mindestens zwei elektrolytischen Elektroden (6) in der Zwischenkammer (17) angeordnet sind, und die Zwischenkammer (17) so ausgebildet ist, dass sie darin eingefülltes Wasser (U) hält, wobei die Zwischenkammer (17) über einen Einlasskanal (31), an den sich das Einlassventil (3) anschließt, und über einen Auslasskanal (41), an den sich dieser anschließt, mit dem Arbeitszylinder (1) in Fluidverbindung steht das Auslassventil (4);
eine den Außenzylinder (16) umschließende Wärmedämmschicht (8), so dass eine Wärmedämmung der Zwischenkammer (17) gegenüber einer Umgebung gegeben ist;
eine Zündkerze (5), die innerhalb der Zwischenkammer (17) angeordnet und konfiguriert ist, um ein durch Elektrolyse erhaltenes Gas zu zünden;
einen Wassersprüher (11), der innerhalb des Arbeitszylinders (1) angeordnet und konfiguriert ist, um Wasser in den Arbeitszylinder (1) zu sprühen; und
ein Reduzierventil (10), das innerhalb des Einlasskanals (31) angeordnet und geeignet ist, eine Zufuhr von erhitztem Gas von der Zwischenkammer (17) über den Einlasskanal (31) zu dem Auslassventil (3) und weiter zu dem Arbeitszylinder (1) zu steuern.

2. Verbrennungsmotor nach Anspruch 1, **dadurch gekennzeichnet, dass** der Motor ferner einen Temperatursensor (13) umfasst, der in der Zwischenkammer (17) angeordnet und konfiguriert ist, um eine Temperatur innerhalb der Zwischenkammer (17) zu steuern.

3. Verbrennungsmotor nach Anspruch 1 oder 2, **dadurch gekennzeichnet, dass** der Motor ferner einen Wasserstandssensor (14) umfasst, der in der Zwischenkammer (17) angeordnet und konfiguriert ist, um einen Wasserstand des Wassers in der Zwischenkammer (17) zu steuern.

4. Verbrennungsmotor nach einem der Ansprüche 1 bis 3, **dadurch gekennzeichnet, dass** der Motor mit einem Wasserzuführkanal (9) ausgestattet ist, der mit der Zwischenkammer (17) zum Zuführen des Wassers (U) in Fluidverbindung steht die Zwischenkammer (17).

5. Verbrennungsmotor nach einem der Ansprüche 1 bis 4, **dadurch gekennzeichnet, dass** die Wassersprüher (11) innerhalb des Arbeitszylinders (1) zwischen dem Einlassventil (3) und dem Auslassventil (4) angeordnet ist.

6. Verbrennungsmotor nach einem der Ansprüche 1 bis 5, **dadurch gekennzeichnet, dass** der Kolben (2) zur Umwandlung einer Translationsbewegung des Kolbens (2) in eine Drehbewegung mit dem Kurbelwellen und Kolbenstangengetriebe (15) verbunden ist.

7. Verbrennungsmotor nach einem der Ansprüche 1 bis 5, **dadurch gekennzeichnet, dass** in einem Abschnitt des Arbeitszylinders (1), also hinter dem Kolben (2), ein Hilfsarbeitszylinder (1A) ausgebildet ist, der Hilfsarbeitszylinder (1A) umfasst ein Hilfseinlassventil (3A) und ein Hilfsauslassventil (4), wobei die Zwischenkammer (17) mittels einer Zwischenwand (21) in zwei getrennte Hilfskammern (17, 17A) unterteilt ist, wobei jede Hilfskammer (17, 17A) ihre eigenen elektrolytischen Elektroden (6) und ihre eigenen Verbrennungs- und Dampfbereiche (7, 7A) umfasst, wobei die Hilfszwischenkammer (17A) über einen Hilfseinlasskanal (31A) und einen Hilfsauslasskanal (41) in Fluidverbindung mit dem Hilfsarbeitszylinder (1A) steht;
wobei der Verbrennungsmotor ferner umfasst:
eine innerhalb der Hilfszwischenkammer (17A) angeordnete Hilfszündkerze (5A);
einen Hilfswassersprüher (11A), der innerhalb des Hilfsarbeitszylinders (1A) angeordnet ist;
ein Hilfsreduzierventil (10A), das innerhalb des Hilfseinlasskanals (31A) angeordnet ist;
einen Hilfstemperatursensor (13A) und einen Hilfswasserstandssensor (14A), die in der Hilfszwischenkammer (17A) angeordnet sind; und
einen Hilfswasserzuführkanal (9A), der in Fluidverbindung mit der Hilfszwischenkammer (17A) steht, um das Wasser (U) der Hilfszwischenkammer (17A) zuzuführen.

## Revendications

1. Moteur à combustion interne comprenant un cylindre de travail (1), un piston (2) disposé à l'intérieur du cylindre de travail (1), une soupape d'admission (3) et une soupape de sortie (4),
**caractérisé en ce que** le moteur à combustion interne comprend en outre:
un cylindre extérieur (16) enfermant le cylindre de travail (1), de sorte qu'une chambre intermédiaire (17) est formée entre le cylindre de travail enfermé (1) et le cylindre extérieur (16), dans lequel au moins deux électrodes électrolytiques (6) sont agencées dans ladite chambre intermédiaire (17), et la chambre intermédiaire (17) est formée de manière à contenir une eau (U) déposée dans celle-ci, dans lequel la chambre intermédiaire (17) est en communication fluidique avec le cylindre de travail (1) via un canal d'entrée (31), qui est suivi par la soupape d'admission (3), et via un canal de sortie (41), qui est suivi par le soupape de sortie (4);
une couche d'isolation thermique (8) entourant le cylindre extérieur (16), de sorte qu'une isolation thermique est prévue pour la chambre intermédiaire (17) vis-à-vis d'un environnement;
une bougie d'allumage (5) agencée à l'intérieur de la chambre intermédiaire (17) et configurée pour allumer un gaz obtenu par électrolyse;
un pulvérisateur d'eau (11) disposé à l'intérieur du cylindre de travail (1) et configuré pour pulvériser de l'eau dans le cylindre de travail (1); et
une soupape de réduction (10) agencée à l'intérieur du canal d'entrée (31) et adaptée pour contrôler une alimentation en gaz chauffé depuis la chambre intermédiaire (17) via le canal d'entrée (31) vers la soupape de sortie (3) et ensuite vers le cylindre de travail (1).

2. Moteur à combustion interne selon la revendication 1, **caractérisé en ce que** le moteur comprend en outre un capteur de température (13) agencé dans la chambre intermédiaire (17) et configuré pour contrôler une température à l'intérieur de la chambre intermédiaire (17).

3. Moteur à combustion interne selon la revendication 1 ou 2, **caractérisé en ce que** le moteur comprend en outre un capteur de niveau d'eau (14) agencé dans la chambre intermédiaire (17) et configuré pour contrôler un niveau d'eau de l'eau à l'intérieur de la chambre intermédiaire (17).

4. Moteur à combustion interne selon l'une quelconque des revendications 1 à 3, **caractérisé en ce que** le moteur est équipé d'un canal d'alimentation en eau (9), qui est en communication fluidique avec la chambre intermédiaire (17) pour l'alimentation en eau (U) de ladite chambre intermédiaire (17).

5. Moteur à combustion interne selon l'une quelconque des revendications 1 à 4, **caractérisé en ce que** le pulvérisateur d'eau (11) est disposé à l'intérieur du cylindre de travail (1) entre la soupape d'admission (3) et la soupape de sortie (4).

6. Moteur à combustion interne selon l'une quelconque des revendications 1 à 5, **caractérisé en ce que** le piston (2) est relié au mécanisme de vilebrequin et de tige de piston (15) pour la conversion d'un mouvement de translation du piston (2) en un mouvement de rotation.

7. Moteur à combustion interne selon l'une quelconque des revendications 1 à 5, **caractérisé en ce que** dans une section du cylindre de travail (1), qui se trouve derrière le piston (2), un cylindre de travail auxiliaire (1A) est conçu, le cylindre de travail auxiliaire (1A) comprend une soupape d'admission auxiliaire (3A) et une soupape de sortie auxiliaire (4), dans lequel la chambre intermédiaire (17) est divisée en deux chambres auxiliaires (17, 17A) séparées au moyen d'une paroi intermédiaire (21), dans lequel chaque chambre auxiliaire (17, 17A) comprend ses propres électrodes électrolytiques (6) et ses propres zones de combustion et de vapeur (7, 7A), dans lequel la chambre intermédiaire auxiliaire (17A) est en communication fluidique avec le cylindre de travail auxiliaire (1A) via un canal d'entrée auxiliaire (31A) et un canal de sortie auxiliaire (41);
dans lequel le moteur à combustion interne comprend en outre:
une bougie d'allumage auxiliaire (5A) disposée à l'intérieur de la chambre intermédiaire auxiliaire (17A);
un pulvérisateur d'eau auxiliaire (11A) agencé à l'intérieur du cylindre de travail auxiliaire (1A);
une soupape de réduction auxiliaire (10A) agencée à l'intérieur du canal d'entrée auxiliaire (31A);
un capteur de température auxiliaire (13A) et un capteur de niveau d'eau auxiliaire (14A) disposés dans la chambre intermédiaire auxiliaire (17A); et
un canal d'alimentation en eau auxiliaire (9A) qui est en communication fluidique avec la chambre intermédiaire auxiliaire (17A) pour alimenter en eau (U) ladite chambre intermédiaire auxiliaire (17A).
